# EUROPEAN PATENT SPECIFICATION

(11) **EP 3 772 770 B1**
(45) Date of publication and mention of the grant of the patent: **13.04.2022**
(21) Application number: 20189402.9
(22) Date of filing: 04.08.2020
(51) Int. Cl.: H01M 10/613, H01M 10/625, H01M 10/653, H01M 10/6552

(54) **VEHICLE BATTERY PACK**
FAHRZEUGBATTERIEPACK
BLOC-BATTERIE DE VÉHICULE

(30) Priority: 08.08.2019 JP 2019146741
(43) Date of publication of application: 10.02.2021
(73) Proprietor: Suzuki Motor Corporation, Shizuoka 432-8611 (JP)
(72) Inventor: IWASAKI, Takashi, Shizuoka, 432-8611 (JP); SAGUCHI, Koichi, Shizuoka, 432-8611 (JP)
(74) Representative: Haseltine Lake Kempner LLP

(56) References cited:
- EP-A1- 2 241 468
- EP-A1- 2 357 104
- DE-A1-102016 200 600
- DE-A1-102018 208 472
- JP-A- 2008 062 780

## Description

### Technical Field

The present invention relates to a vehicle battery pack.

### Background Art

A vehicle such as a hybrid vehicle or an electric motor vehicle includes a large-capacity battery module that supplies electric power to a traveling motor, and electrical components such as a fan and an inverter. The battery module and the electrical components are integrated as a battery pack by being accommodated in a housing, and the battery module and the electrical components are cooled by circulating cooling air inside the housing.

A battery pack described in Patent Literature 1 and 2 has been known as this type of vehicle battery pack of related art. In the battery pack (vehicle battery pack) described in Patent Literature 1, a fluid flow path through which a heat exchange medium (air) flows has a plurality of bent flow paths that are bent from a main fluid flow path to cool battery cells in a battery module (battery module), and the bent flow path has an end flow path and a midway branch flow path that branches off from the middle of the main fluid flow path and cools the battery cells. The midway branch flow path guides air to a lower surface of the battery cell. As a result, the vehicle battery pack described in Patent Literature 1 can evenly cool each battery cell.

### Citation List

### Patent Literature

Patent Literature 1: JP-A-2014-116114 Patent literature 2: DE 2016 200 600

### Summary of Invention

### Technical Problem

However, since an inverter integrated in the vehicle battery pack includes a switching element that operates so as to be switched on and off at a high speed, the inverter generates a large amount of heat due to the operation of the switching element, and has a characteristic that a temperature tends to be higher than that of the battery.

For this reason, in the vehicle battery pack in which electric components such as the inverter are accommodated in the housing together with the battery, it is necessary to take care so that high temperature air heated by the electrical components does not come into contact with the battery module.

On the other hand, in the vehicle battery pack, there are cases where the battery module and the electrical components have to be arranged adjacent to each other due to reasons of reducing the size, design restrictions, and the like.

Therefore, in the case where the battery module and the electrical component are arranged adjacent to each other, the high temperature air heated by the electrical components may flow into the periphery of the battery module if no measures are taken.

The present invention has been made in view of the above circumstances, and an object thereof is to provide a vehicle battery pack in which a battery module and an electrical component can be arranged adjacent to each other, and high temperature air around the electrical component can be prevented from moving to the battery module side and causing the battery module to reach a high temperature.

### Solution to Problem

The present invention is given in the claims and relates to a vehicle battery pack that includes:
a battery unit, formed of a plurality of battery modules, and including a plurality of air circulation surfaces that perform heat exchange with air for cooling and are arranged in a predetermined direction;
an electrical component arranged adjacent to the battery unit; and
a duct including a plurality of flow path forming portions respectively forming a plurality of flow paths that extend along a surface of the battery unit having the air circulation surface and are arranged at intervals in the predetermined direction,
wherein the duct includes a first partition portion that bridges adjacent flow path forming portions and extends in the predetermined direction, and
wherein a low heat conductivity layer having a heat conductivity lower than a heat conductivity of the first partition portion is provided between the first partition portion and the battery unit.

### Advantageous Effects of Invention

Thus, according to the present invention described above, the battery module and the electrical component can be arranged adjacent to each other, and high temperature air around the electrical component can be prevented from moving to the battery module side and causing the battery module to reach a high temperature.

### Brief Description of Drawings

Fig. 1 is a plan view showing an external appearance of a vehicle battery pack according to an embodiment of the present invention.
Fig. 2 is a perspective view showing an internal configuration of the vehicle battery pack according to the embodiment of the present invention.
Fig. 3 is a perspective view showing a cooling structure of a battery module of the vehicle battery pack according to the embodiment of the present invention.
Fig. 4 is a cross-sectional view taken along a line IV-IV shown in Fig. 1.
Fig. 5 is a plan view showing the cooling structure of the battery module of the vehicle battery pack according to the embodiment of the present invention.
Fig. 6 is a bottom view showing the cooling structure of the battery module of the vehicle battery pack according to the embodiment of the present invention.
Fig. 7 is a rear view showing the cooling structure of the battery module of the vehicle battery pack according to the embodiment of the present invention.
Fig. 8 is a view showing other configuration of a flow path forming portion of the vehicle battery pack according to the embodiment of the present invention.

### Description of Embodiments

A vehicle battery pack according to an embodiment of the present invention includes: a battery unit formed of a plurality of battery modules in which a plurality of air circulation surfaces that performs heat exchange with air for cooling is arranged in a predetermined direction; an electrical component arranged adjacent to the battery unit; and a duct having a plurality of flow path forming portions respectively forming a plurality of flow paths that extend along a surface of the battery unit having the air circulation surface and are arranged at intervals in the predetermined direction, wherein the duct has a first partition portion that bridges adjacent flow path forming portions and extends in the predetermined direction, and wherein a low heat conductivity layer having a lower heat conductivity than that of the first partition portion is provided between the first partition portion and the battery unit. Accordingly, in the vehicle battery pack according to the embodiment of the present invention, the battery module and the electrical component can be arranged adjacent to each other, and high temperature air around the electrical component can be prevented from moving to the battery module side and causing the battery module to reach a high temperature.

### [Embodiment]

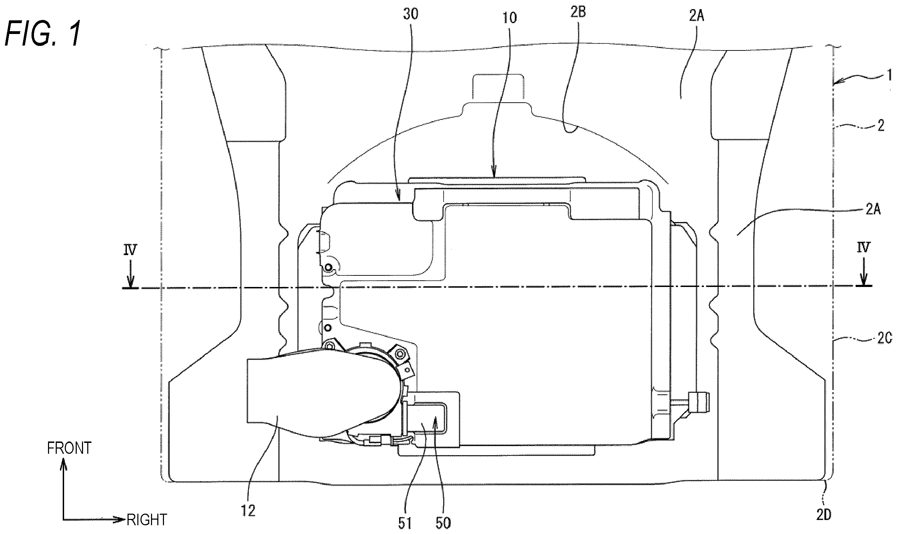

Hereinafter, a vehicle battery pack according to an embodiment of the present invention will be described with reference to the drawings. In Figs. 1 to 8, upper, lower, front, rear, left and right directions are upper, lower, front, rear, left and right directions of the vehicle battery pack installed in a vehicle, a direction orthogonal to a front-rear direction of the vehicle is a left-right direction, and a height direction of the vehicle battery pack is an upper-lower direction.

Figs. 1 to 8 are views showing the vehicle battery pack according to the embodiment of the present invention. In Fig. 1, a vehicle battery pack 10 is accommodated in a recessed portion 2B formed in a rear floor panel 2A at a rear portion of a vehicle body 2 of a vehicle 1. The recessed portion 2B is formed in a shape capable of accommodating the entire vehicle battery pack 10 at a position lower than the rear floor panel 2A. The rear floor panel 2A forms a luggage compartment by a side panel 2C constituting a side surface of the vehicle body 2 and a rear panel 2D constituting a rear surface of the vehicle body.

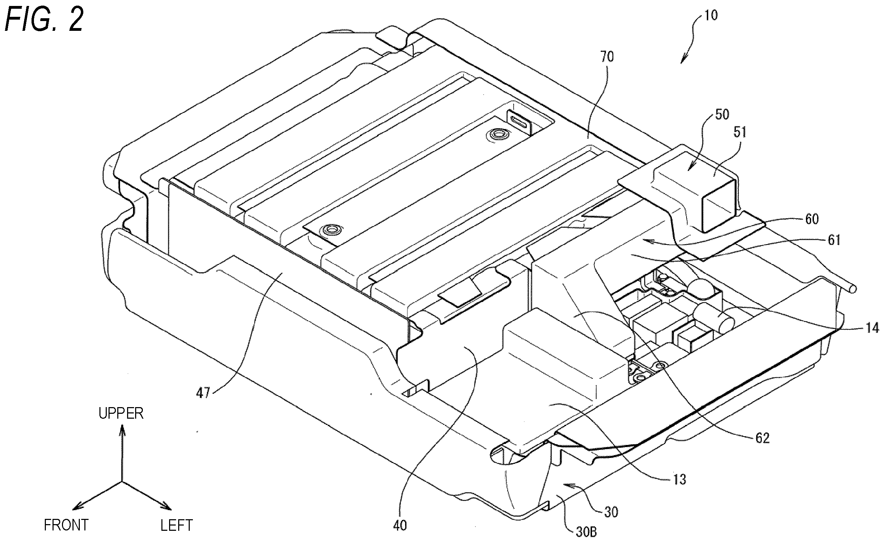

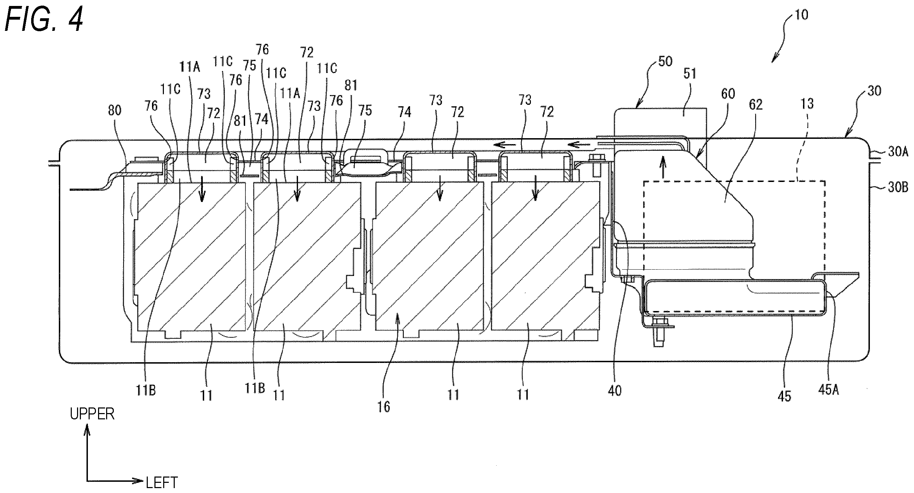

In Figs. 2 and 4, the vehicle battery pack 10 includes a plurality of (four in this embodiment) battery modules 11 (see Fig. 4). The battery modules 11 are electrically connected to each other and form a battery unit 16.

The vehicle battery pack 10 includes an inverter 13 as an electrical component that converts electric power from the battery modules 11, and a switching unit 14 that electrically connects the battery modules 11 and the inverter 13. Further, the vehicle battery pack 10 includes a duct 50 that supplies air for cooling to each unit, and a cooling fan 12 (see Fig. 1) connected to an end portion of the duct 50.

In Figs. 1, 2 and 4, the vehicle battery pack 10 includes a housing 30. The battery modules 11, the inverter 13, the switching unit 14, and the duct 50 are accommodated in the housing 30. The housing 30 is divided into an upper housing 30A and a lower housing 30B as shown in Fig. 4.

In Fig. 4, the battery modules 11 are arranged side by side in a vehicle width direction. Each battery module 11 is formed of an assembled battery in which a plurality of cells is electrically connected. The battery unit 16 is arranged in a region on a right side from a center portion of the housing 30 in the vehicle width direction. Therefore, as shown in Figs. 2 and 4, a space in which the inverter 13 and the switching unit 14 are arranged is formed in a region on a left side of the battery unit 16 in the housing 30.

In Fig. 1, the cooling fan 12 is arranged on an upper surface of a left rear end portion of the housing 30, takes in air from the outside of the housing 30, and supplies the taken-in air to the duct 50 (see Fig. 2). In Fig. 2, the duct 50 includes an upstream duct 51 connected to the cooling fan 12, a first duct 70 that branches from the upstream duct 51 and extends toward the right side along the rear surface of the battery unit 16, and a second duct 60 that branches from the upstream duct 51 and extends forward toward the inverter 13. The first duct 70 has a plurality of flow path forming portions 73 (see Fig. 4) which will be described later, and allows air to flow through the battery modules 11. Further, the second duct 60 allows air to flow through the inverter 13.

The air supplied from the cooling fan 12 to the upstream duct 51 flows in a manner of branching into the first duct 70 and the second duct 60. The air flowing into the second duct 60 from the upstream duct 51 is supplied to the inverter 13 to cool the inverter 13. The air flowing into the first duct 70 from the upstream duct 51 is supplied to an upper surface of each battery module 11 as described later, and cools each battery module 11.

The inverter 13 and the switching unit 14 are arranged in a space on the left side of the battery unit 16 (see Fig. 4) in the vehicle width direction in the housing 30. The inverter 13 and the switching unit 14 are arranged side by side in a vehicle front-rear direction. The inverter 13 is arranged in front of the switching unit 14. The inverter 13 and the switching unit 14 are electrically connected to each other via a bus bar (not shown).

In Fig. 4, the battery module 11 has an air circulation surface 11A on the upper surface thereof for heat exchange with the air for cooling. Further, a pair of vertical walls 11C extending in the front-rear direction is provided on the upper surface of the battery module 11, and the pair of vertical walls 11C is arranged on outer sides of the air circulation surface 11A in the vehicle width direction. A space immediately above the air circulation surface 11A constitutes an intake port 11B, and the air for cooling supplied to the intake port 11B is guided to each cell inside the battery module 11.

The first duct 70 of the duct 50 has a plurality of flow path forming portions 73. The flow path forming portions 73 respectively form flow paths 72 that extend along the upper surface of the battery module 11 having the air circulation surface 11A and are arranged at intervals in a predetermined direction. The predetermined direction is the vehicle width direction in this embodiment.

In Fig. 4, the duct 50 has a first partition portion 74, and the first partition portion 74 bridges adjacent flow path forming portions 73 and extends in the predetermined direction The first partition portion 74 partitions a space between the adjacent flow path forming portions 73 and a space in which the battery unit 16 is arranged. Accordingly, high temperature air in the inverter 13 is prevented from flowing between the adjacent flow path forming portions 73 to the battery unit 16 side. A low heat conductivity layer 75 having a lower heat conductivity than that of the first partition portion 74 is provided between the first partition portion 74 and the battery unit 16. In this embodiment, the low heat conductivity layer 75 is an air layer. Instead of the air layer, the low heat conductivity layer 75 may be formed of a low heat conductivity member having a heat conductivity lower than that of the first partition portion 74. Further, the low heat conductivity layer 75 may be provided inside the first partition portion 74.

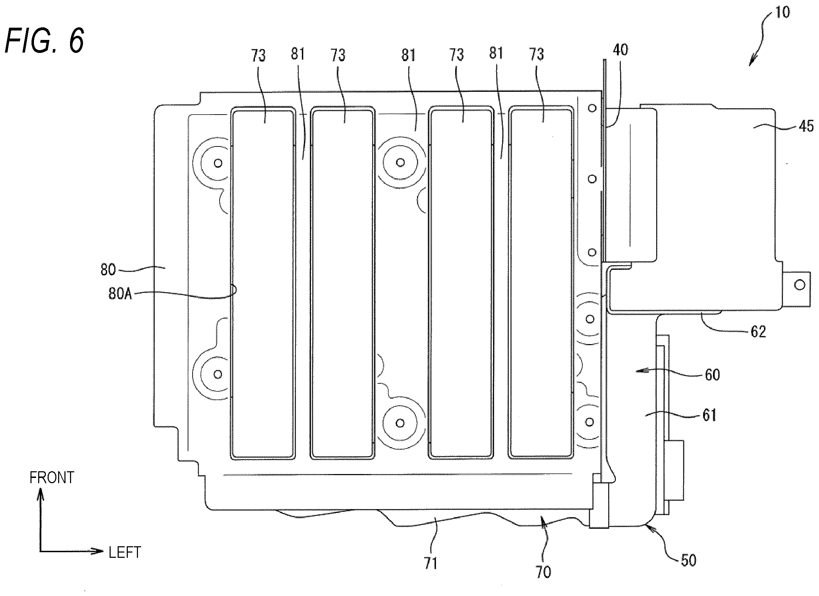

In Fig. 4, the vehicle battery pack 10 includes a duct support member 80 that supports the duct 50. The duct support member 80 covers the upper surfaces of the battery modules 11 together with the flow path forming portions 73 of the duct 50. The duct support member 80 has a second partition portion 81, and the second partition portion 81 faces the first partition portion 74 and is arranged adjacent to the air circulation surface 11A. In Fig. 6, the duct support member 80 is formed with an opening portion 80A into which the four flow path forming portions 73 are inserted.

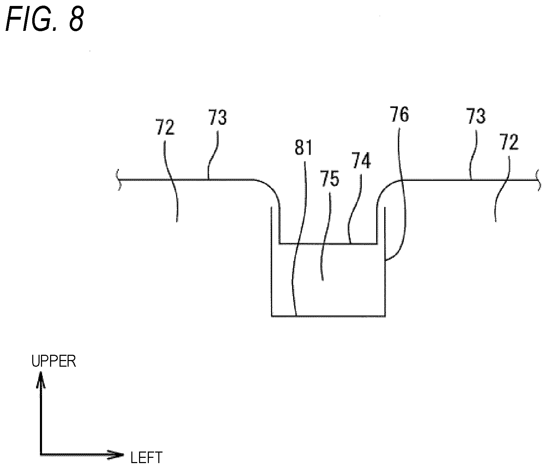

In Fig. 4, the vehicle battery pack 10 includes a pair of third partition portions 76, and the third partition portion 76 partitions the low heat conductivity layer 75 and the flow paths 72 adjacent to the low heat conductivity layer 75 in the predetermined direction. In the present embodiment, the pair of third partition portions 76 is provided so as to extend downward from both end portions of the first partition portion 74 in the vehicle width direction. Therefore, the pair of third partition portions 76 forms side walls of the flow path forming portion 73. In the present embodiment, the pair of third partition portions 76 is inserted so as to be in close contact with the pair of vertical walls 11C. As a result, the pair of third partition portions 76 can be positioned and the airtightness of the flow paths 72 can be improved. As shown in Fig. 8, the pair of third partition portions 76 is provided so as to extend upward from both end portions of the second partition portion 81 in the vehicle width direction. As shown in Fig. 8, the third partition portion 76 partitions the low heat conductivity layer 75 and the flow paths 72 adjacent to the low heat conductivity layer 75 in the predetermined direction, and functions similarly to the third partition portion 76 shown in Fig. 4.

In Fig. 4, the air circulation surface 11A is provided on the upper surface of the battery module 11, and the inverter 13 is arranged adjacent to the left side of the battery unit 16. A fourth partition portion 40 is provided between the inverter 13 and the battery unit 16 to partition the inverter 13 and the battery unit 16. The fourth partition portion 40 covers a left side surface of the battery unit 16 and prevents heat generated in the inverter 13 from wrapping around from the left side surface of the battery unit 16 and reaching the battery module 11 as described above.

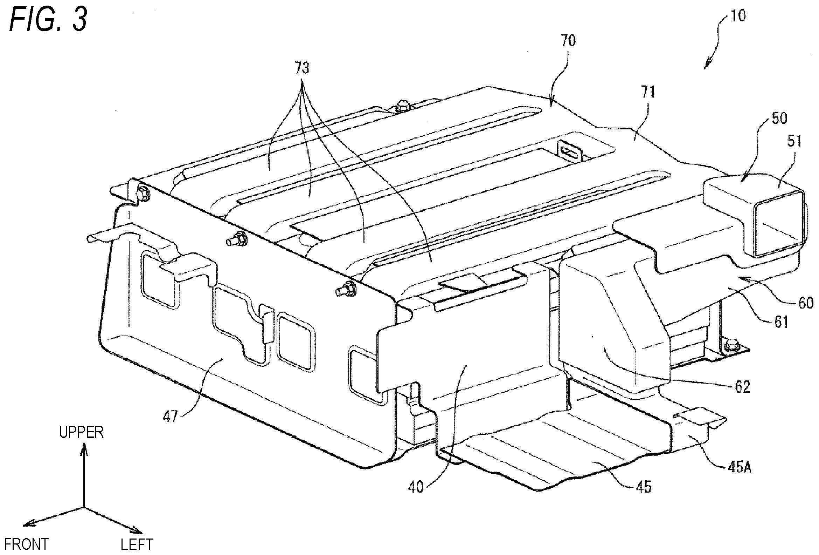

As shown in Figs. 2 and 3, the duct support member 80 includes a fifth partition portion 47 that partitions a side surface of the battery unit 16 (see Fig. 4) on one end side in an orthogonal direction orthogonal to the predetermined direction. In this embodiment, the orthogonal direction is the front-rear direction. The fifth partition portion 47 covers a front surface of the battery unit 16 and prevents heat generated in the inverter 13 from wrapping around from the front surface side of the battery unit 16 and reaching the battery module 11 as described above.

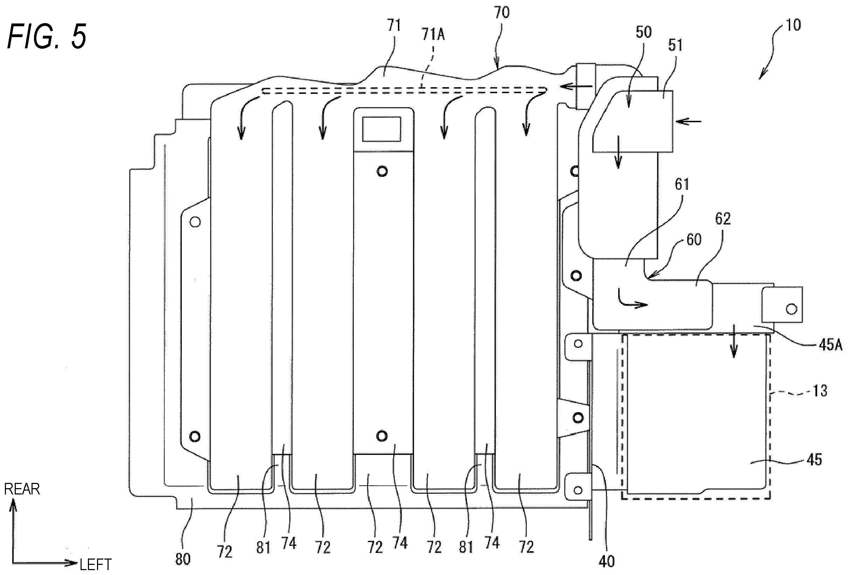

In Figs. 2 and 5, the second duct 60 is arranged along a side surface of the battery unit 16 in the predetermined direction on the fourth partition portion 40 side. The second duct 60 of the duct 50 has a front-rear direction extending portion 61 extending in the front-rear direction. The second duct 60 also has a facing portion 62 connected to a front end portion of the front-rear direction extending portion 61. The facing portion 62 faces the inverter 13 in the orthogonal direction orthogonal to the predetermined direction. The facing portion 62 is arranged between the inverter 13 and the switching unit 14 in the front-rear direction. Here, the front-rear direction extending portion 61 has a rectangular flow path shape when viewed from the front-rear direction, and a portion extending leftward in the vehicle width direction and downward from the front end portion of the front-rear direction extending portion 61 serves as the facing portion 62.

In Figs. 3 and 4, an air passage forming member 45 is provided below the facing portion 62 via a connecting portion 45A. The air passage forming member 45 faces a lower surface of the inverter 13 (see Fig. 4) and extends along the lower surface, and an air flow path is formed between the air passage forming member 45 and the lower surface of the inverter 13. A heat sink (not shown) is provided on the lower surface of the inverter 13, and the air supplied to the lower surface of the inverter 13 by the air passage forming member 45 cools the inverter 13 by heat exchange with the heat sink.

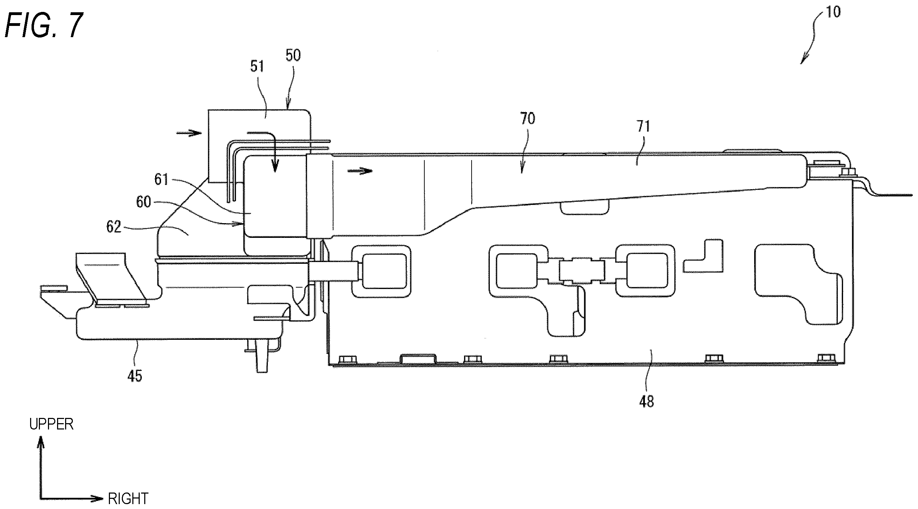

In Fig. 7, the first duct 70 has a branch duct 71. The branch duct 71 has a branch region 71A (see Fig. 5) where branching into the plurality of flow path forming portions 73 is started. The branch duct 71 is arranged along a side surface of the battery unit 16 on the other end side in the orthogonal direction. Specifically, the branch duct 71 extends in the vehicle width direction along an upper portion of a rear side surface of the battery unit 16. A sixth partition portion 48 is provided between the branch duct 71 of the first duct 70 and the battery unit 16. The sixth partition portion 48 covers the rear surface of the battery unit 16 and prevents heat generated in the inverter 13 from wrapping around from the rear surface of the battery unit 16 and reaching the battery module 11 as described above.

In the present embodiment, the predetermined direction and the orthogonal direction are the vehicle width direction and the front-rear direction, respectively, but these directions are merely examples. The present invention can be applied without being restricted in the direction with respect to the vehicle 1.

As described above, in the vehicle battery pack 10 of the present embodiment, the duct 50 has the first partition portion 74 that bridges adjacent flow path forming portions 73 and extends in the predetermined direction, and the low heat conductivity layer 75 having a lower heat conductivity than that of the first partition portion 74 is provided between the first partition portion 74 and the battery unit 16.

As a result, the high temperature air around the inverter 13 can be prevented from entering the battery unit 16 side through a gap between the flow path forming portions 73.

Further, the low heat conductivity layer 75 can prevent the high temperature air around the inverter 13 from being transmitted to the battery unit 16 via the first partition portion 74.

The vehicle battery pack 10 of the present embodiment includes the duct support member 80 that supports the duct 50, and the duct support member 80 has the second partition portion 81 which faces the first partition portion 74 and is arranged adj acent to the air circulation surface 11A.

According to the present embodiment, the low heat conductivity layer 75 and the second partition portion 81 are provided between the first partition portion 74 and the battery unit 16, so that the heat of the air around the inverter 13 can be prevented from being transmitted to the battery unit 16 and the air around the battery unit 16 via the first partition portion 74.

The vehicle battery pack 10 of the present embodiment includes the pair of third partition portions 76 that partitions the low heat conductivity layer 75 and the flow paths 72 adjacent to the low heat conductivity layer 75 in the predetermined direction.

As a result, the third partition portion 76 prevents the air from moving between the low heat conductivity layer 75 and the air circulation surface 11A even though the low heat conductivity layer 75 is an air layer, so that when air around the inverter 13 enters the low heat conductivity layer 75, the air can be prevented from flowing to the battery unit 16 side through the low heat conductivity layer 75.

In the vehicle battery pack 10 of the present embodiment, the air circulation surface 11A is provided on the upper surface of the battery module 11, the inverter 13 is arranged adjacent to the battery unit 16, and the fourth partition portion 40 for partitioning between the inverter 13 and the battery unit 16 is provided.

As a result, the fourth partition portion 40 can prevent the air around the inverter 13 from flowing from the inverter 13 to the battery unit 16 side.

When the air around the inverter 13 moves upward since the temperature thereof rises and the air density per unit volume decreases, and then flows into the upper surface side of the battery unit 16 along a top surface portion of the battery unit 16, the air can be blocked by the flow path forming portions 73 and the first partition portion 74 of the duct 50, and high temperature air can be prevented from flowing into the battery unit 16 side.

In the vehicle battery pack 10 of the present embodiment, the duct support member 80 includes the fifth partition portion 47 that partitions a side surface of the battery unit 16 on one end side in the orthogonal direction orthogonal to the predetermined direction.

As a result, the fifth partition portion 47 can prevent the high temperature air around the inverter 13 from wrapping around to the battery unit 16 side from the side surface on the one end side in the orthogonal direction of the battery unit 16, so that the high temperature air around the inverter 13 can be further prevented from flowing to the battery unit 16 side.

In the vehicle battery pack 10 of the present embodiment, the duct 50 is branched into the first duct 70 that has a plurality of flow path forming portions 73 and the second duct 60 that allows air to flow through the inverter 13. Further, the second duct 60 is arranged along the side surface of the battery unit 16 in the predetermined direction on the fourth partition portion 40 side, and has the facing portion 62 that faces the inverter 13 in the orthogonal direction orthogonal to the predetermined direction.

As a result, the side surface of the inverter 13 on the battery unit 16 side in the predetermined direction is partitioned by the fourth partition portion 40, and the side surface of the inverter 13 in the orthogonal direction is partitioned by the facing portion, so that the high temperature air around the inverter 13 can be prevented from flowing to the battery unit 16 side.

In the vehicle battery pack 10 of the present embodiment, the first duct 70 has the branch duct 71 having the branch region 71A where branching into the plurality of flow path forming portions 73 is started, and the branch duct 71 is arranged along the side surface of the battery unit 16 on the other end side in the orthogonal direction.

As a result, the high temperature air around the inverter 13 can be prevented from flowing to the battery unit 16 side from the side surface of the battery unit 16 on the branch duct side.

Although the embodiment of the present invention has been disclosed, it will be apparent to those skilled in the art that modifications may be made without departing from the scope of the present invention. It is intended that all such modifications and equivalents be included in the following claims.

### Reference Signs List

10 vehicle battery pack
11 battery module
11A air circulation surface
13 inverter (electrical component)
16 battery unit
40 fourth partition portion
45 air passage forming member
47 fifth partition portion
48 sixth partition portion
50 duct
60 second duct
62 facing portion
70 first duct
71 branch duct
71A branch region
72 flow path
73 flow path forming portion
74 first partition portion
75 low heat conductivity layer
76 third partition portion
80 duct support member
81 second partition portion

## Claims

1. A vehicle battery pack (10), **characterized by** comprising:
a battery unit (16), formed of a plurality of battery modules (11), and including a plurality of air circulation surfaces (11A) that perform heat exchange with air for cooling and are arranged in a predetermined direction;
an electrical component (13) arranged adjacent to the battery unit (16); and
a duct (50) including a plurality of flow path forming portions (73) respectively forming a plurality of flow paths (72) that extend along a surface of the battery unit (16) having the air circulation surface (11A) and are arranged at intervals in the predetermined direction,
wherein the duct (50) includes a first partition portion (74) that bridges adjacent flow path forming portions (73) and extends in the predetermined direction, and
wherein a low heat conductivity layer (75) having a heat conductivity lower than a heat conductivity of the first partition portion (74) is provided between the first partition portion (74) and the battery unit (16),
wherein the air circulation surface (11A) is provided on an upper surface of the battery module (11),
wherein the electrical component (13) is arranged adjacent to a side of the battery unit (16), and
wherein the vehicle battery pack (10) further comprises a fourth partition portion (40) partitioning between the electrical component (13) and the battery unit (16).

2. The vehicle battery pack according to claim 1, further comprising:
a duct support member (80) that supports the duct (50),
wherein the duct support member (80) includes a second partition portion (81) that faces the first partition portion (74) and is arranged adjacent to the air circulation surface (11A).

3. The vehicle battery pack according to claim 2, further comprising:
a pair of third partition portions (76) that partitions the low heat conductivity layer (75) and the flow paths (72) adjacent to the low heat conductivity layer (75) in the predetermined direction.

4. The vehicle battery pack according to claim 2 or 3,
wherein the duct support member (80) includes a fifth partition portion (47) that partitions a side surface of the battery unit (16) on one end side in an orthogonal direction orthogonal to the predetermined direction.

5. The vehicle battery pack according to claim 1,
wherein the duct (50) is branched into a first duct (70) that including a plurality of flow path forming portions (73), and a second duct (60) that allows air to flow through the electrical component (13), and
wherein the second duct (60) is arranged along a side surface of the battery unit (16) in the predetermined direction on a side of the fourth partition portion (40), and includes a facing portion (62) that faces the electrical component (13) in an orthogonal direction orthogonal to the predetermined direction.

6. The vehicle battery pack according to claim 5,
wherein the first duct (70) has a branch duct (71) having a branch region (71A) where branching into the plurality of flow path forming portions (73) is started, and
wherein the branch duct (71) is arranged along a side surface of the battery unit (16) on the other end side in the orthogonal direction.

## Patentansprüche

1. Fahrzeugbatteriepack (10), **dadurch gekennzeichnet, dass** er umfasst:
eine Batterieeinheit (16), die aus einer Vielzahl von Batteriemodulen (11) gebildet ist und eine Vielzahl von Luftzirkulationsoberflächen (11A) beinhaltet, die Wärmeaustausch mit Luft zum Kühlen ausführen und in einer vorbestimmten Richtung eingerichtet sind;
ein elektrisches Bauteil (13), das an die Batterieeinheit (16) angrenzend eingerichtet ist; und
eine Leitung (50), die eine Vielzahl von Strömungswegen beinhaltet, die Abschnitte (73) bilden, die jeweils eine Vielzahl von Strömungswegen (72) bilden, die sich entlang einer Oberfläche der Batterieeinheit (16), die die Luftzirkulationsoberfläche (11A) aufweist, erstrecken und in Abständen in der vorbestimmten Richtung eingerichtet sind,
wobei die Leitung (50) einen ersten Teilungsabschnitt (74) beinhaltet, der angrenzende Strömungswegbildungsabschnitte (73) überbrückt und sich in der vorbestimmten Richtung erstreckt, und
wobei eine Schicht (75) mit niedriger Wärmeleitfähigkeit, die eine Wärmeleitfähigkeit niedriger als eine Wärmeleitfähigkeit des ersten Teilungsabschnitts (74) aufweist, zwischen dem ersten Teilungsabschnitt (74) und der Batterieeinheit (16) bereitgestellt ist,
wobei die Luftzirkulationsoberfläche (11A) auf einer oberen Oberfläche des Batteriemoduls (11) bereitgestellt ist,
wobei das elektrische Bauteil (13) an eine Seite der Batterieeinheit (16) angrenzend eingerichtet ist, und
wobei der Fahrzeugbatteriepack (10) weiter einen vierten Teilungsabschnitt (40) umfasst, der zwischen dem elektrischen Bauteil (13) und der Batterieeinheit (16) teilt.

2. Fahrzeugbatteriepack nach Anspruch 1, der weiter umfasst:
ein Leitungsstützelement (80), das die Leitung (50) stützt,
wobei das Leitungsstützelement (80) einen zweiten Teilungsabschnitt (81) beinhaltet, der dem ersten Teilungsabschnitt (74) zugewandt und an die Luftzirkulationsoberfläche (11A) angrenzend eingerichtet ist.

3. Fahrzeugbatteriepack nach Anspruch 2, der weiter umfasst:
ein Paar dritter Teilungsabschnitte (76), das die Schicht (75) mit niedriger Wärmeleitfähigkeit und die Strömungswege (72), die an die Schicht (75) mit niedriger Leitfähigkeit angrenzen, in der vorbestimmten Richtung teilen.

4. Fahrzeugbatteriepack nach Anspruch 2 oder 3,
wobei das Leitungsstützelement (80) einen fünften Teilungsabschnitt (47) beinhaltet, der eine Seitenoberfläche der Batterieeinheit (16) auf einer Endseite in eine orthogonale Richtung orthogonal zu der vorbestimmten Richtung teilt.

5. Fahrzeugbatteriepack nach Anspruch 1,
wobei die Leitung (50) in eine erste Leitung (70), die eine Vielzahl von Strömungswegbildungsabschnitten (73) beinhaltet, und eine zweite Leitung (60), die es Luft erlaubt, durch das elektrische Bauteil (13) zu strömen, beinhaltet, und
wobei die zweite Leitung (60) entlang einer Seitenoberfläche der Batterieeinheit (16) in der vorbestimmten Richtung auf einer Seite des vierten Teilungsabschnitts (40) eingerichtet ist und einen zugewandten Abschnitt (62) beinhaltet, der dem elektrischen Bauteil (13) in einer orthogonalen Richtung orthogonal zu der vorbestimmten Richtung zugewandt ist.

6. Fahrzeugbatteriepack nach Anspruch 5,
wobei die erste Leitung (70) eine Zweigleitung (71) aufweist, die einen Zweigbereich (71A) aufweist, wo das Verzweigen in die Vielzahl von Strömungswegbildungsabschnitten (73) beginnt, und
wobei die Zweigleitung (71) entlang einer Seitenoberfläche der Batterieeinheit (16) auf der anderen Endseite in die orthogonale Richtung eingerichtet ist.

## Revendications

1. Bloc-batterie de véhicule (10), **caractérisé en ce qu'**il comprend :
une unité de batterie (16), formée d'une pluralité de modules de batterie (11), et comprenant une pluralité de surfaces de circulation d'air (11A) qui effectuent un échange de chaleur avec de l'air de refroidissement et sont agencées dans une direction prédéterminée ;
un composant électrique (13) agencé de manière adjacente à l'unité de batterie (16) ; et
un conduit (50) comprenant une pluralité de parties de formation de trajet d'écoulement (73) formant respectivement une pluralité de trajets d'écoulement (72) qui s'étendent le long d'une surface de l'unité de batterie (16) ayant la surface de circulation d'air (11A) et sont agencés à des intervalles dans la direction prédéterminée,
dans lequel le conduit (50) comprend une première partie de séparation (74) qui relie des parties de formation de trajet d'écoulement adjacentes (73) et s'étend dans la direction prédéterminée, et
dans lequel une couche à faible conductivité thermique (75) ayant une conductivité thermique inférieure à une conductivité thermique de la première partie de séparation (74) est prévue entre la première partie de séparation (74) et l'unité de batterie (16),
dans lequel la surface de circulation d'air (11A) est prévue sur une surface supérieure du module de batterie (11),
dans lequel le composant électrique (13) est agencé adjacent à un côté de l'unité de batterie (16), et
dans lequel le bloc de batterie de véhicule (10) comprend en outre une quatrième partie de séparation (40) séparant le composant électrique (13) et l'unité de batterie (16).

2. Bloc-batterie de véhicule selon la revendication 1, comprenant en outre :
un élément de support de conduit (80) qui supporte le conduit (50),
dans lequel l'élément de support de conduit (80) comprend une deuxième partie de séparation (81) qui fait face à la première partie de séparation (74) et est agencée adjacente à la surface de circulation d'air (11A).

3. Bloc-batterie de véhicule selon la revendication 2, comprenant en outre :
une paire de troisièmes parties de séparation (76) qui séparent la couche à faible conductivité thermique (75) et les trajets d'écoulement (72) adjacents à la couche à faible conductivité thermique (75) dans la direction prédéterminée.

4. Bloc-batterie de véhicule selon la revendication 2 ou 3,
dans lequel l'élément de support de conduit (80) comprend une cinquième partie de séparation (47) qui sépare une surface latérale de l'unité de batterie (16) sur un côté d'extrémité dans une direction orthogonale qui est orthogonale à la direction prédéterminée.

5. Bloc-batterie de véhicule selon la revendication 1,
dans lequel le conduit (50) est ramifié en un premier conduit (70) qui comprend une pluralité de parties de formation de trajet d'écoulement (73), et un second conduit (60) qui permet à de l'air de s'écouler à travers le composant électrique (13), et
dans lequel le second conduit (60) est agencé le long d'une surface latérale de l'unité de batterie (16) dans la direction prédéterminée sur un côté de la quatrième partie de séparation (40), et comprend une partie en vis-à-vis (62) qui est en vis-à-vis du composant électrique (13) dans une direction orthogonale qui est orthogonale à la direction prédéterminée.

6. Bloc-batterie de véhicule (1810) selon la revendication 5.
dans lequel le premier conduit (70) a un conduit de ramification (71) ayant une région de ramification (71A) où la ramification dans la pluralité de parties de formation de trajet d'écoulement (73) est commencée, et
dans lequel le conduit de ramification (71) est agencé le long d'une surface latérale de l'unité de batterie (16) sur l'autre côté d'extrémité dans la direction orthogonale.
